Europäisches Patentamt

European Patent Office

Office européen des brevets

(19)

(11) Publication number: **0 057 083**
**B1**

# EUROPEAN PATENT SPECIFICATION

(45) Date of publication of patent specification: **05.12.84**

(51) Int. Cl.³: **H 02 M 3/335**

(21) Application number: **82300299.3**

(22) Date of filing: **21.01.82**

(54) **Power converter.**

(30) Priority: **24.01.81 JP 9220/81**

(43) Date of publication of application:
**04.08.82 Bulletin 82/31**

(45) Publication of the grant of the patent:
**05.12.84 Bulletin 84/49**

(84) Designated Contracting States:
**DE FR GB IT NL SE**

(56) References cited:
**DE-B-2 603 174**

**Patent Abstracts of Japan Vol. 4, No. 87, 21
June 1980
Patent Abstracts of Japan Vol. 4, No. 63, 13
May 1980 page 55E10
Patent Abstracts of Japan Vol. 4, No. 52, 18
April 1980 page 138E7**

(73) Proprietor: **Oki Electric Industry Company,
Limited
7-12, Toranomon 1-chome Minato-ku
Tokyo 105 (JP)**

(72) Inventor: **Suzuki, Yoshikazu
Oki Electric Ind. Co. Ltd. 7-12 Toranomon
1-chome
Minato-ku Tokyo (JP)**

(74) Representative: **George, Sidney Arthur et al
GILL JENNINGS & EVERY 53-64 Chancery Lane
London WC2A 1HN (GB)**

Courier Press, Leamington Spa, England.

## Description

This invention relates to a power converter which operates at a high efficiency and with low noise.

Since switching-type power converters have been in use, the size of power units in electronic apparatus has become smaller. However, due to the rapid progress of semiconductor technology, power units are needed which are smaller than at present. Also a power unit for an electronic apparatus is required to operate at a higher efficiency, and with lower noise.

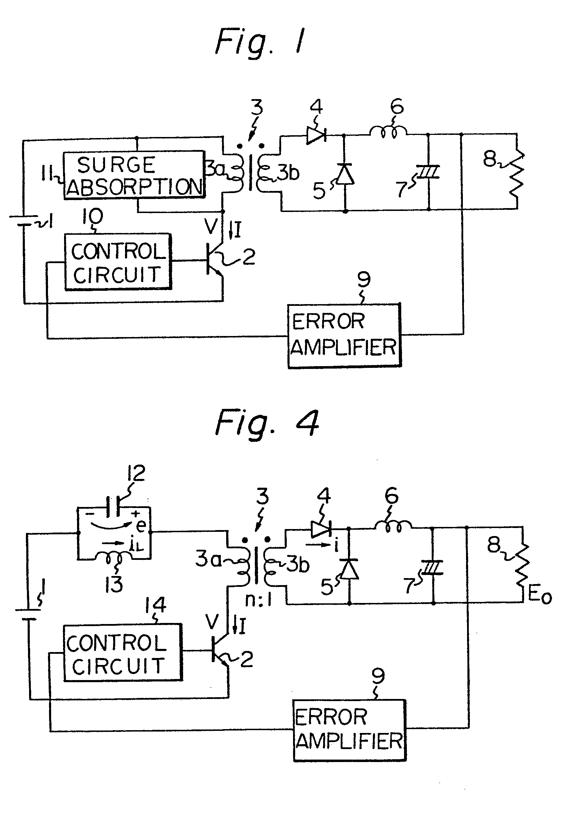

A prior power supply unit with a single transistor is shown in Figure 1 of the accompanying drawings. In the circuit of Figure 1, a battery 1 or other DC power source provides a DC voltage $E_i$. A switching element 2 comprises a transistor. A primary winding 3a of a transformer 3 is connected in series with the switching element 2 across the battery 1. Diodes 4 and 5 are connected to a secondary winding 3b of the transformer 3 for rectifying the output voltage produced across the secondary winding 3b. A choke coil 6 and a capacitor 7 together operate as an output filter circuit. A load 8 is coupled across the capacitor 7. An error voltage amplifier 9 monitors the output voltage across the load 8 and provides an error voltage which is the difference between the output voltage across the load and a predetermined reference voltage. A control circuit 10 controls the ON and OFF switching operation of the transistor 2 according to the output of the error voltage amplifier 9. The control circuit 10 adjusts the ON duration and/or the OFF duration of the transistor 2. A surge absorption circuit 11 is coupled across the primary winding 3a.

Power from the battery 1 is converted to an alternating voltage by the switching transistor, and that alternating voltage appears across the secondary winding 3b of the transformer 3. The output power of the transformer 3 is applied to the load 8 through the output filter circuit comprising the choke coil 6 and the capacitor 7. The output voltage across the load 8 is monitored by the error voltage amplifier 9, which controls the ON/OFF operation of the transistor 2 through the control circuit 10, so that the desired output voltage is obtained across the load 8. The surge absorption circuit 11 protects the transistor 2 by absorbing the surge voltage induced in the transformer 3 at the OFF transition of the transistor 2.

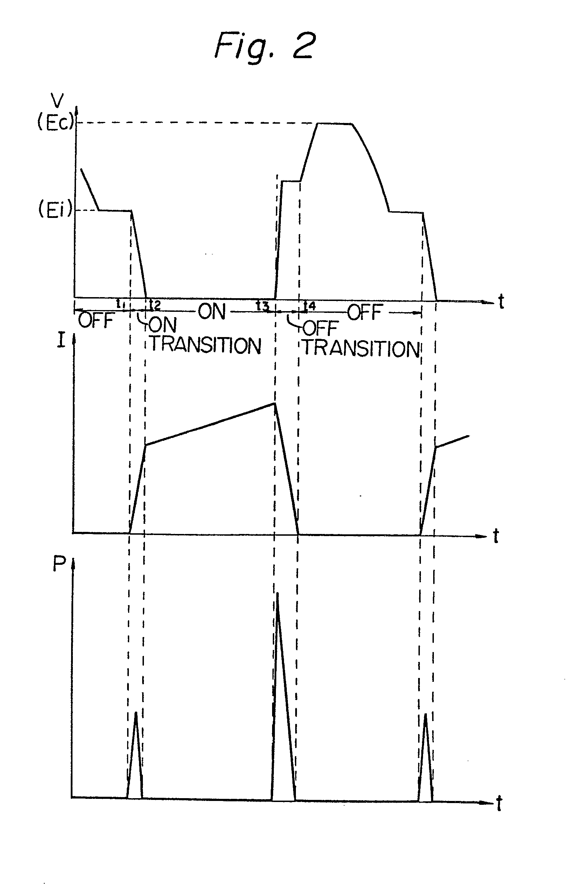

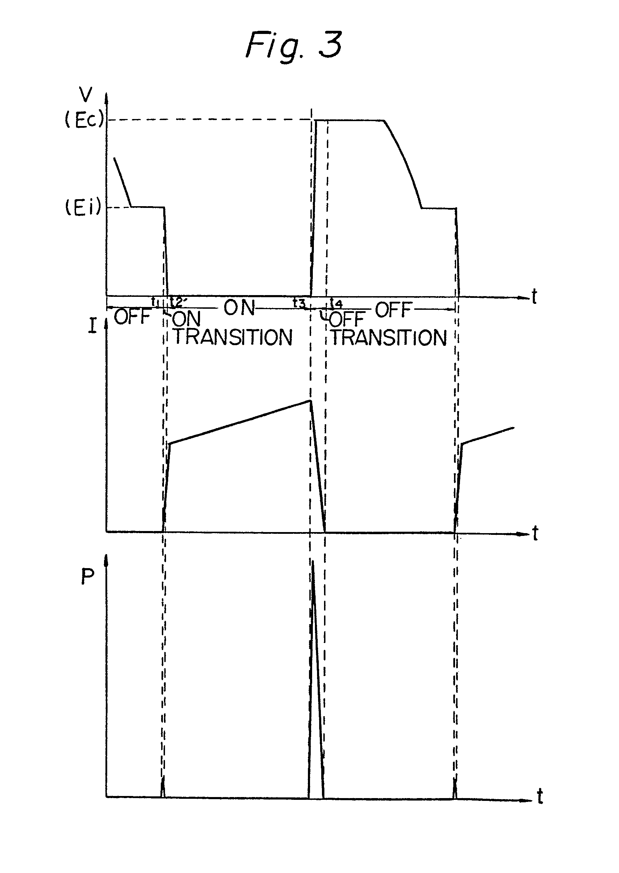

Figure 2 and Figure 3 show curves of the switching loss in a switching transistor for slow switching and rapid switching, respectively. In Figures 2 and 3, the symbol V represents the voltage applied across the switching transistor 2, I is the current in the switching transistor 2, and P is the power dissipated in the switching transistor 2.

In Figure 2, where the switching operation is slow, it is assumed that the switching transistor 2 is in the OFF state until a time $t_1$, and is turned to the ON state at the time $t_1$ and remains in that state during a period $t_1$ to $t_3$. The duration between the time $t_1$ and a time $t_2$ is the ON transition time. At the time $t_3$ the transistor 2 is turned to the OFF state, and a time from $t_3$ to $t_4$ is the OFF transition time i.e. the time for transition from the ON state to the OFF state.

When the transistor 2 is turned to the ON state, the collector voltage V of the transistor 2 is reduced slowly, according to the switching characteristics of the transistor, from an initial voltage $E_i$ which is the battery voltage, and reaches zero voltage at the time $t_2$, on condition that the transistor 2 is completely saturated. The current I in the transistor 2 increases slowly, according to the switching characteristics of the transistor 2. The power P, which is the product of the voltage V and the current I, and is the loss in the transistor 2 during the ON transition between $t_1$ and $t_2$, is rather large. During the time $t_2$ to $t_3$ the transistor 2 remains in the ON state. The voltage V is zero, and the current I still increases due to the presence of the inductance of the choke coil 6. When the transistor 2 is turned to OFF at the time $t_3$, the current I reduces slowly according to the characteristics of the transistor 2, and reaches zero at the time $t_4$. In the OFF transition, a voltage is induced in the leakage inductance of the transformer 3, and then the voltage V is the sum of the leakage reactance voltage and the voltage $E_i$ of the battery 1. Hence, the power loss P is considerably larger in the OFF transition between $t_3$ and $t_4$. After the time $t_4$, the current I remains zero, and the voltage V rises to the clamp voltage $E_c$ because of the flyback voltage of the transformer. The voltage V then returns to the source voltage $E_i$ according to the decrease in the flyback voltage.

During rapid switching as shown in Figure 3, when the transistor 2 is turned to the ON state the voltage V of the transistor 2 becomes zero quickly at a time $t'_2$, although the current I increases relatively slowly due to the primary leakage inductance of the transformer 3. Therefore, the power loss P in the ON transition between $t_1$ and $t'_2$ is very small. When the transistor 2 is turned to the OFF state at the time $t_3$, the voltage V increases to the clamp voltage $E_c$ rapidly because of the high leakage voltage, which reflects the high rate of decrease of the current I in the transistor 2. The current I decreases to zero at a time $t'_4$ relatively slowly, because the voltage V is restricted to the clamp voltage $E_c$ and the decrease rate of the current in the transistor 2 is small. Therefore, the power loss in the OFF transition between $t_3$ and $t'_4$ is still large.

As mentioned above, the power loss P in the switching transistor consists mainly of the OFF transition loss, which depends upon the leakage inductance of the transformer 3 and the clamp voltage $E_c$ of the surge absorption circuit 11. Therefore, the power loss P does not decrease even when a highspeed switching transistor is used.

The large power loss in a switching transistor results in the generation of heat in an apparatus in

2

which it is operating, and the temperature of the apparatus becomes high as a result. Therefore, the size of the apparatus of Figure 1 cannot be as small as desired, because of the high operational temperature and the decrease in the operational reliability due to that high temperature.

It is an object of the present invention to provide a new and improved power converter in which the power loss is small and the heat generation is also small.

According to the invention there is provided a power converter comprising a DC power source, a switching element, a transformer having a secondary winding and a primary winding which is coupled to the DC power source and the switching element so that the DC power source, the primary winding and the switching element form a closed circuit, a control circuit for turning ON and OFF the switching element, a rectifier circuit coupled to the secondary winding of the transformer, and an output filter circuit coupled to the rectifier circuit, to the output of which filter circuit can be coupled an external load; characterised in that the power converter further comprises a parallel circuit comprising a capacitor and a coil inserted in the closed circuit; and in that the control circuit is operative such that the switching element is turned to the ON state when the current in the coil reaches a predetermined value which depends upon the output power of the power converter, and the switching element is turned to the OFF state after the current in the switching element reaches zero.

The presence of the capacitor and the coil is an important feature of the present invention. The mode of operation of the control circuit is another important feature.

Preferably the control circuit has a current transformer for detecting the current in the coil and the current in the switching element, and a level detector for detecting that the current reaches a predetermined threshold level.

By use of the present invention, the power loss, in particular the power loss in an OFF transition, is considerably reduced because the current in the switching element is zero when that switching element is turned to the OFF state, and no leakage reactance voltage appears on the transformer.

An embodiment of the invention will now be described, by way of example, with reference to the accompanying drawings; in which:—

Figure 1 is a circuit diagram of a prior power converter,

Figure 2 shows the operational waveforms of the circuit of Figure 1 when the operational speed of the switching transistor is low,

Figure 3 shows operational waveforms of the circuit of Figure 1 when the operational speed of the switching transistor is high,

Figure 4 is a schematic circuit diagram of a power converter according to the present invention,

Figure 5 shows operational waveforms of the circuit of Figure 4;

Figure 6 is a detailed circuit diagram of the power converter according to the present invention;

Figure 7 shows operational waveforms of the circuit of Figure 6; and

Figures 8 and 9 are graphs for comparing the conversion efficiency of the present power converter with that of the prior converter.

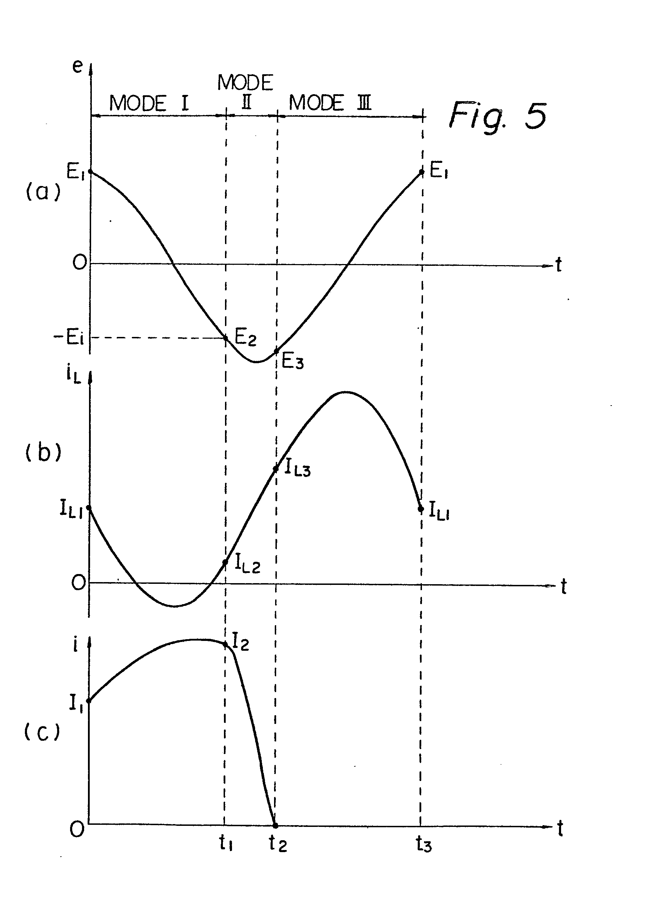

Figures 1 to 3 have already been referred to in the above discussion of the prior art. Figure 4 is a brief circuit diagram of a power converter according to the present invention, and has the same reference numerals as those of Figure 1 for the same members, namely the battery or other DC power source 1, the switching element 2, the transformer 3 with a primary winding 3a and a secondary winding 3b, diodes 4 and 5, a choke coil 6, a capacitor 7, a load 8 and an error voltage amplifier 9.

The converter of the present invention further includes a capacitor 12 and a coil 13 which are connected together in parallel. The parallel circuit is inserted between the DC power source 1 and the primary winding 3a of the transformer 3. A control circuit 14 sets the switching element 2 in the ON state when the current in the coil 13 reaches a predetermined value which depends upon the output power, and sets the switching element 2 in the OFF state after the current in the switching element 2 reaches zero.

Figure 5 shows the operational waveforms of the circuit of Figure 4. Figure 5(a) shows the waveform of the voltage across the capacitor 12, Figure 5(b) shows the waveform of the current in the coil 13, and Figure 5(c) shows the waveform of the current in the diode 4. The polarity in Figures 5(a) and 5(b) corresponds to the arrows of Figure 4.

When the switching element 2 switches to the ON state, in response to the output voltage of the control circuit 14, the primary winding 3a of the transformer 3 receives a voltage which is the sum of the voltage $E_i$ of the DC power source 1, and the voltage $E_1$ across the capacitor 12. The voltage induced across the secondary winding 3b causes the diode 4 to conduct in the forward direction. Power from the DC power source 1 is therefore fed to the load 8 through the capacitor 12 and the coil 13, the switching element 2 and the transformer 3, and at the same time the choke coil 6 stores energy. The capacitor 12 is discharged by the current fed from the DC power source 1 to the transformer 3, and further, in the next stage, the capacitor 12 is charged to the opposite polarity. When the voltage on the capacitor 12 reaches $-E_i$ the voltage across the primary winding 3a becomes zero, and the feeding of power from the DC power source 1 to the transformer 3 stops.

An operational mode I shown in Figure 5 is confined to the duration from the switching-on of the switching element 2 to the time that the voltage across the primary winding 3a becomes zero. Then the voltage e across the capacitor 12, the current $i_L$ in the coil 13, and the current i in the diode 4 are expressed by equations (1a), (1b) and (1c), respectively, below by solving the following differential equations (1), (2) and (3).

$$L_0(di/dt)=(1/n)(e-E_i-V_{DSS}-L_2(d/dt)(i/n)-E_G) \tag{1}$$

$$-e=L_1(di_L/dt) \tag{2}$$

$$-e=(1/C)\int(i/n-i_L)dt \tag{3}$$

$$e=-A_1\sin(\omega_1 t+\theta_1)+(E_i/n+E_0)/(\omega_1^2 nL_0'C) \tag{1a}$$

$$i_L=-(A_1/(\omega_1 L_1))\cos(\omega_1 t+\theta_1)+(1/(\omega_1^2 nC))(I_1/L_1+I_{L1}/(nL_0'))-(((E_i/n)+E_0)/(\omega_1^2 nL_0'L_1 C))t \tag{1b}$$

$$i=(A_1/(\omega_1 nL_0'))\cos(\omega_1 t+\theta_1)+(1/(\omega_1^2 C))(I_1/L_1+I_{L1}/(nL_0'))-((E_i/n+E_0)/(\omega_1^2 L_0'L_1 C))t \tag{1c}$$

where

$$A_1=\sqrt{((-1/(\omega_1 C))(I_1/n-I_{L1}))^2+(E_1-((E_i/n)+E_0)/(\omega_1^2 nL_0'C))^2}$$

$$\theta_1=\tan^{-1}((E_1-((E_i/n+E_0)/(\omega_1^2 nL_0'C)))/((-1/\omega_1 C)(I_1/n-I_{L1})))$$

$$\omega_1=\sqrt{(1/C)((1/(n^2 L_0'))+1/L_1)}$$

$$L_0'=L_0+L_2/n^2$$

In the above equations, the symbol t shows the time from the transition to the ON state of the switching element 2, $E_1$, $I_{L1}$ and $I_1$ are the initial values of e, $i_L$ and i, respectively, at the time $t=0$, and $E_0$ is the voltage across the capacitor 7 or the output voltage. Also, the symbol C is the capacitance of the capacitor 12, $L_0$ and $L_1$ are the inductance of the choke coil 6 and the coil 13, respectively, $L_2$ is the primary leakage inductance of the transformer 3, n is the winding ratio of the primary winding 3a to the secondary winding 3b. The $V_{DSS}$ is the saturation voltage between the collector and the emitter of the switching element, $E_G$ is the voltage drop in the resistance of the primary winding 3a, $V_F$ is the forward voltage drop in each diode 4 or 5, and $E_R$ is the voltage drop by the resistance in the secondary winding 3b. It is supposed in the above equations that the voltage drop ($V_{DSS}$, $V_F$) in the forward direction in the switching element 2 and the diode 4 is very small, and the resistances of the primary winding 3a and the secondary winding 3b of the transformer 3 are also very small, and also the relation $E_G=E_R=0$ is satisfied.

The mode I finishes at the time $t_1$ when the relation $e=-E_i$ in the equation (1a) is satisfied, and at that time $t_1$ the value i is $I_2$ which is close to the maximum value as shown in Fig. 5(c). Since the primary voltage across the primary winding 3a is zero at the time $t_1$, the secondary voltage across the secondary winding 3b is also zero at that time $t_1$. Thus, the decrease of the value i increases the current in the diode 5, and therefore, the current in the choke coil 6 is kept constant. In other words, the change of the value i is defined by the primary circuit of the transformer 3, but does not depend upon the secondary circuit of the transformer 3.

Next, a mode II is defined as the duration from $i=I_2$ to $i=0$, and the values e, $i_L$ and i in the mode II are expressed by the equations (2a), (2b) and (2c) below by solving the differential equations (4), (5) and (6).

$$L_2(d/dt)(i/n)=e-E_i-V_{DSS}-E_G \tag{4}$$

$$-e=L_1(di_L/dt) \tag{5}$$

$$-e=(i/C)\int(i/n-i_L)dt \tag{6}$$

$$e=-A_2\sin(\omega_2(t-t_2)+\theta_2)+E_i/\omega_2^2 L_2 C \tag{2a}$$

$$i_L=-(A_2/(\omega_2 L_1))\cos(\omega_2(t-t_1)+\theta_2)+(1/(\omega_2^2 C))(I_2/(nL_1)+I_{L2}/L_2)-(E_i/(\omega_2^2 L_1 L_2 C))(t-t_1) \tag{2b}$$

$$i=((nA_2)/(\omega_2 L_2))\cos(\omega_2(t-t_1)+\theta_2)+(n/(\omega_2^2 C))(I_2/(nL_1)+(I_{L2}/L_2))-(nE_i/(\omega_2^2 L_1 L_2 C))(t-t_1) \tag{2c}$$

where

$$A_2=\sqrt{((-1/(\omega_2 C))(I_2/n-I_{L2}))^2+(E_2-E_i/(\omega_2^2 L_2 C))^2}$$

$$\theta_2=\tan^{-1}\{(E_2-E_i/(\omega_2^2 L_2 C))/((-1/(\omega_2 C))(I_2/n-I_{L2}))\}$$

$$\omega_2=\sqrt{(1/C)(1/L_1+1/L_2)}$$

In the above equations, the symbols $E_2$, $I_{L2}$ and $I_2$ are e, $i_L$ and i in the equations (1a), (1b) and (1c), respectively, at the time $t=t_1$, and said values $E_2$, $I_{L2}$ and $I_2$ are the initial conditions in the mode II.

Since $\omega_2 > \omega_1$ is satisfied, the value i decreases rapidly in the mode II as shown in Fig. 5(c), and the current i reaches zero. The change of the current i in the diode 4 is the same as the change of the current in the switching element 2 on the time axis, although the absolute value of the former is different from the absolute value of the latter. Thus, if the control circuit 14 causes the switching element 2 to switch off at the time $t=t_2$ in the equation (2c) by making $i=0$ at the end of the mode II, the switching loss becomes zero.

A mode III is defined as the duration at the switching element is in the OFF state. Then, the values e, $i_L$ and i in the mode III are shown by the equations (3a), (3b) and (3c), which are obtained by solving the differential equations (7) and (8).

$$-e=L_1(di_L/dt) \tag{7}$$

$$e=(I/C)\int i_L dt \tag{8}$$

$$e=A_3\sin(\omega_3(t-t_2)+\theta_3) \tag{3a}$$

$$i_L=(A_3/(\omega_3 L_1))\cos(\omega_3(t-t_2)+\theta_3) \tag{3b}$$

$$i=0 \tag{3c}$$

where

$$A_3=\sqrt{(I_{L3}/(\omega_3 C))^2+E_3^2}$$

$$\theta_3=\tan^{-1}(E_3/(I_{L3}/(\omega_3 C)))$$

$$\omega_3=I/\sqrt{L_1 C}$$

In the equations (3a), (3b) and (3c), the values $E_3$ and $I_{L3}$ are initial conditions of the mode III and are obtained by the values i and $i_L$ in the equations (2a) and (2b) respectively, at the time $t=t_2$.

The operational mode returns to the mode I again when the control circuit 14 turns the switching element 2 to the ON state at the time $t=t_3$ when $e=E_1$ and $i_L=I_{L1}$ in the equations (3a) and (3b) are satisfied. The operational modes I, II and III are repeated.

As mentioned above, the present invention decreases the power loss in the switching element 2 during the switching transitions. In particular, the power loss in the OFF transition is reduced, since the switching element is turned to the OFF state after the current in the element becomes zero. In order to provide a satisfactory decrease in the power loss in the OFF transition, the control circuit 14 must provide the proper initial conditions to the circuit elements.

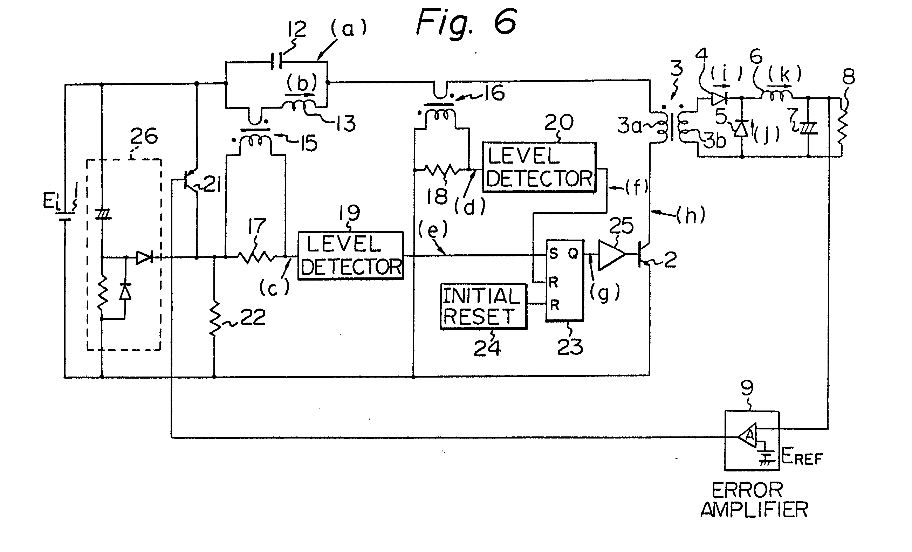

Figure 6 is a detailed circuit diagram of a power converter according to the present invention. Components which are also shown in Figure 4 have the same reference numerals as in that Figure. In addition, current transformers 15 and 16 are provided for detecting the current in the coil 13 and in the primary winding 3a of the transformer 3, respectively. The current transformers 15 and 16 are terminated by resistors 17 and 18 respectively. Level detectors 19 and 20 provide a narrow output pulse when the input voltage applied thereto crosses the predetermined threshold level in the negative direction. The collector current of a transistor 21 is controlled by the error voltage amplifier 9, which comprises a comparator A and a reference voltage source $E_{REF}$ and provides the difference between the reference voltage $E_{REF}$ and the output voltage across the load 8. The transistor 21 is connected to a resistor 22. A flip-flop 23 is turned to a set state by the output pulse from the level detector 19, and is turned to a reset state by the output pulse of the other level detector 20. The circuit also includes an initial reset circuit 24, a power amplifier 25 for turning the switching element 2 on and off, and an initial start circuit 26 comprising a capacitor, a resistor and two diodes.

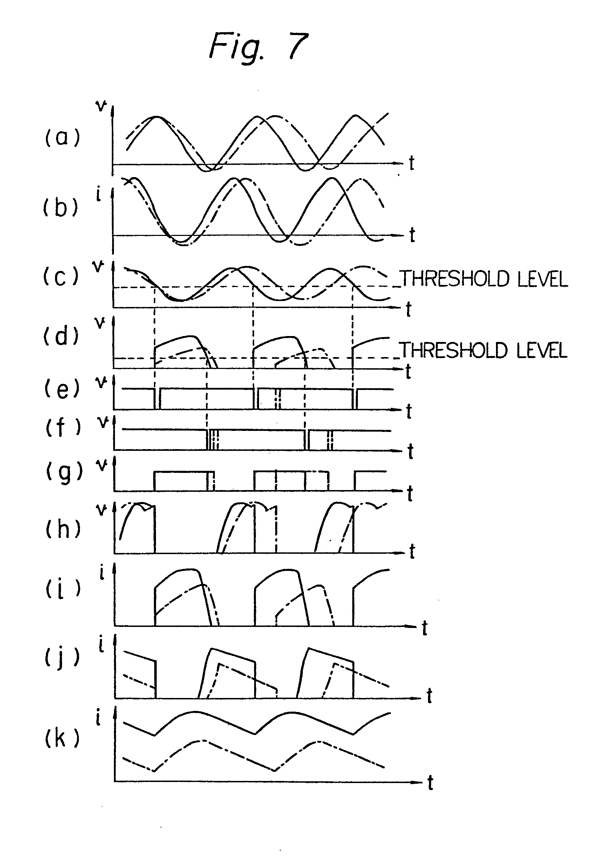

Figure 7 shows the operational waveforms of the circuit of Figure 6. In Figure 7 a curve (a) shows the voltage across the capacitor 12, a curve (b) shows the current in the coil 13, and curves (c) and (d) show the voltages across the termination resistors 17 and 18, respectively. Curves (e) and (f) show the output voltages from the level detectors 19 and 20, respectively. A curve (g) shows the output voltage of the flip-flop 23, a curve (h) shows the voltage applied to the collector of the switching element 2, and curves (i) and (j) show the current in the diodes 4 and 5, respectively. A curve (k) shows the current in the choke coil 6. In those curves, the solid line shows a condition in which the power consumed in the load 8 is high, and the dotted line shows a condition in which the power consumed in the load 8 is low.

In operation of the circuit, when the DC power source 1 is connected to the circuit, the flip-flop 23 is in the reset state, and the switching element is in the OFF state, by the operation of the initial reset circuit 24. As the capacitor in the initial start circuit 26 is charged, the voltage across the resistor 22 decreases, and when that voltage reaches the predetermined threshold level, the level detector 19 provides an output pulse which sets the flip-flop 23 to the set state, and turns the switching element 2 to the ON state through the power amplifier 25. Hence, the present circuit is started.

As the capacitor 12 is charged, the current in the primary winding 3a of the transformer 3 decreases, and the voltage (see Figure 7(d)) across the termination resistor 18 decreases. When that voltage reaches the predetermined level, the level detector 20 provides the output pulse (see Figures 7(f)), which is applied in the flip-flop 23. Thus, the flip-flop 23 is turned to the OFF state (see Figure 7(g)), and then the switching element 2 is also turned to the OFF state. Next, the capacitor 12 is charged in the opposite direction by the current (see Fig. 7(b)) in the coil 13. At that time, the current in the coil 13 is decreasing (see Fig. 7(b)), and the termination resistor 17 provides the voltage (see Fig. 7(c)) corresponding to the current of Fig. 7(b) through the current transformer 15. Said voltage across the resistor 17 is applied to the level detector 19, and therefore, when the voltage of Fig. 7(c) reaches the predetermined threshold level, said level detector 19 provides the output pulse (see Fig. 7(e)), again, and then the flip-flop 23 is turned to the ON state and the switching element 2 is turned to the ON states. By repeating the above operation, the switching element 2 performs the ON/OFF operation.

The power applied to the load 8 can be adjusted by adjusting the voltage across the resistor 22 through the transistor 21. When the power requested by the load 8 increases, the error voltage amplifier 9 decreases the collector current of the transistor 21, and decreases the voltage across the resistor 22, then the flip-flop 23 and the switching element 2 are turned to the ON state at an early timing to increase the power. On the other hand, if the power requested by the load 8 decreases, the collector current of the transistor 21 is increased to raise the voltage across the resistor 22. Then, the switching timing of the flip-flop 23 and the switching element 2 is delayed and the secondary power delivered to the load is decreased. Thus, according to the present invention, the output power and/or the initial operational condition are adjusted by controlling the operational frequency.

According to the preferred embodiment, the level detectors 19 and 20 are implemented by the integrated circuit MC-14584 manufactured by Motorola Co. in USA, and the error amplifier 9 is implemented by the integrated circuit $\mu$A-723 manufactured by Fairchild Co. in USA. The operational frequency is 80—130 kHz depending upon the load, the value of the capacitor 12 is 0.2 $\mu$F, the value of the inductance 13 is 15 $\mu$H, the value of the choke coil 6 is 6 $\mu$H, the primary voltage $E_i$ is 48 volts for the use of the present power converter for an electronic telephone exchange system. In an actual design of the capacitor 12 and the inductance 13, the values of those elements are designed according to the desired operational frequency.

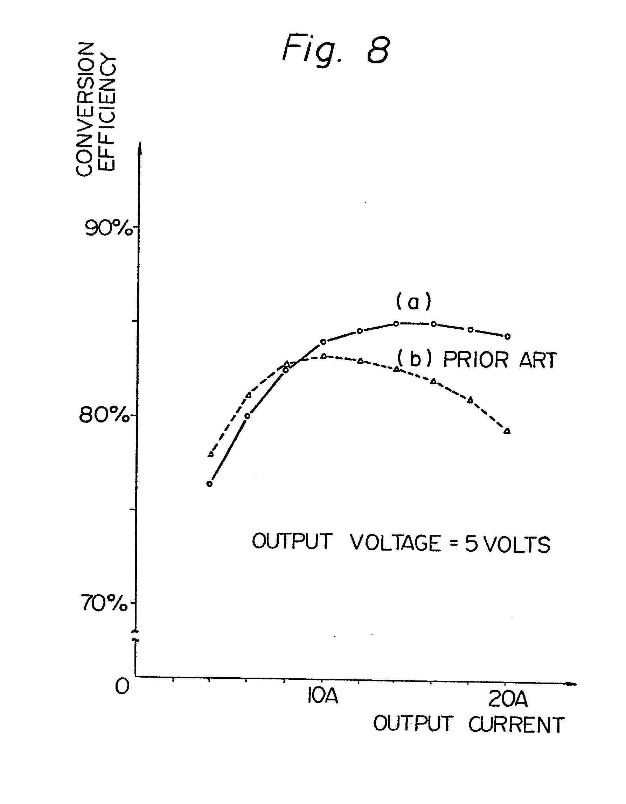

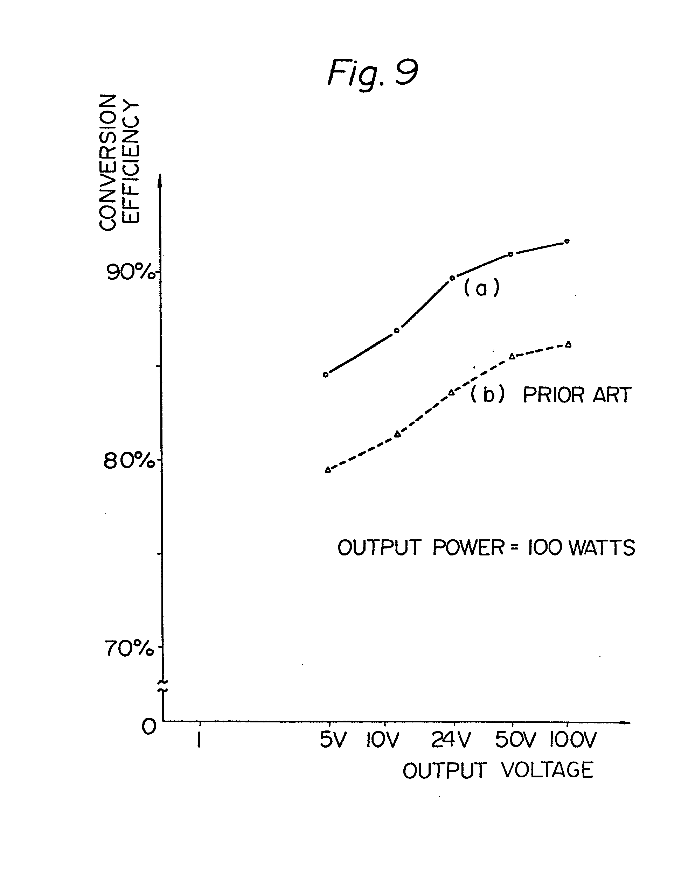

Fig. 8 and Fig. 9 are the curves showing the conversion efficiency of the present invention together with that of the prior art. In those figures, the solid line (a) shows the curve of the present invention, and the dotted line (b) shows the curve of the prior art. In Fig. 8, the horizontal axis shows the output current, and the vertical axis shows the conversion efficiency, and the output voltage is kept at 5 volts in Fig. 8. In Fig. 9, the horizontal axis shows the output voltage, the vertical axis shows the conversion efficiency, and the output power is kept at 100 watts.

As apparent from Figs. 8 and 9, the conversion efficiency of the present invention is better than that of the prior power converter. It will be noted in Figs. 8 and 9 that the conversion efficiency up to 90% is obtained. The remaining power loss of about 10% comes from the loss in the forward voltage drop in the diodes 4 and 5.

As apparent from the above explanation, the parallel circuit with the capacitor and the coil make the current in the switching element zero before that switching element switches to the OFF state, and then the switching element is turned to the OFF state and the source voltage or the collector voltage is applied to the switching element. Therefore, the switching loss in the OFF transition of the switching element is almost eliminated. Thus, a power converter with excellent conversion efficiency is obtained. Further, due to the small conversion loss, the heat generation in an apparatus is also decreased, and thus, the size of an apparatus can be smaller. Further, although a prior power converter generates an undesired noise in the OFF transition due to the rapid change of the voltage and the current, the present power converter generates almost no noise because the collector voltage of the switching element increases slowly after the current in the switching element becomes zero in the OFF transition.

Therefore the present power converter is suitable for use as, for example, a power source of a digital processing apparatus which might suffer from noise from the power supply.

**Claims**

1. A power converter comprising a DC power source (1), a switching element (2), a transformer (3) having a secondary winding (3b) and a primary winding (3a) which is coupled to the DC power source and the switching element (2) so that the DC power source, the primary winding and the switching element form a closed circuit, a control circuit (14) for turning ON and OFF the switching element, a rectifier circuit coupled to the secondary winding of the transformer, and an output filter circuit coupled to the rectifier circuit, to the output of which filter circuit can be coupled an external load; characterised in that the power circuit further comprises a parallel circuit comprising a capacitor (12) and a coil (13) inserted in the closed circuit; and in that the control circuit (14) is operative such that the switching element (2) is turned to the ON state when the current in the coil (13) reaches a predetermined value which depends upon the output power of the power converter, and the switching element is turned to the OFF state after the current in the switching element reaches zero.

2. A power converter according to claim 1, characterised in that the control circuit (14) includes a first current transformer (15) and a resistor (17) connected thereto for monitoring the current in the coil (13); a first level detector (19) for detecting when the current in the coil (13) reaches the predetermined value which depends upon the output power; a second current transformer (16) and a resistor (18) connected thereto for monitoring the current in the switching element (2); and a second level detector (20) for detecting when the current in the switching element reaches zero.

3. A power converter according to claim 2, characterised in that a flip-flop circuit (23) is provided for turning ON and OFF the switching element (2); and in that the flip-flop (23) is turn to the ON state by the output of the first level detector (19) and is turned to the OFF state by the output of the second level detector (20).

4. A power converter according to claim 3, characterised in that a power amplifier (25) is provided between the output of the flip-flop (23) and the input of the switching element (2).

5. A power converter according to any preceding claim, characterised in that the rectifier circuit comprises two diodes (4, 5) one end of the first diode (4) being connected to one end of the secondary winding (3b), and the second diode (5) being connected to the other end of the first diode (4) and the other end of the secondary winding (3b).

6. A power converter according to any preceding claim, characterised in that the output filter circuit comprises a choke coil (6) and a capacitor (7).

7. A power converter according to any preceding claim, characterised by an error voltage amplifier (9) for adjusting the switching timing of the switching element (2) according to the power required by the load.

**Patentansprüche**

1. Leistungswandler mit einer Gleichspannungsquelle (1), einem Schaltelement (2), einem Transformator (3) mit einer Sekundärwicklung (3b) und einer Primärwicklung (3a), die mit der Gleichspannungsquelle und dem Schaltelement (2) so verbunden ist, daß die Gleichspannungsquelle, die Primärwicklung und das Schaltelement einen geschlossenen Stromkreis bilden, einer Steuerschaltung (14) zum Ein- und Ausschalten des Schaltelements, einer an der Sekundärwicklung des Transformators angeschlossenen Gleichrichterschaltung und einer an der Gleichrichterschaltung angeschlossenen Ausgangsfilterschaltung, wobei an den Ausgang der Filterschaltung eine äußere Last angeschlossen werden kann, dadurch gekennzeichnet, daß die Versorgungsschaltung ferner eine Parallelschaltung mit einem Kondensator (12) und einer Spule (13) in dem geschlossenen Stromkreis aufweist und daß die Steuerschaltung (14) derart betreibbar ist, daß das Schaltelement (2) eingeschaltet wird, wenn der durch die Spule (13) fließende Strom einen vorbestimmten Wert erreicht, der von der Ausgangsleistung des Leistungswandlers abhängt, und das Schaltelement ausgeschaltet wird, nachdem der durch das Schaltelement fließende Strom den Wert Null erreicht hat.

2. Leistungswandler nach Anspruch 1, dadurch gekennzeichnet, daß die Steuerschaltung (14) einen ersten Stromtransformator (15) und einem daran angeschlossenen ohmschen Widerstand (17) zum Überwachen des durch die Spule (13) fließenden Stroms; einen ersten Pegeldetektor (19) zum Feststellen, wann der durch die Spule (13) fließende Strom den vorbestimmten Wert erreicht, der von der Ausgangsleistung abhängt; einen zweiten Stromtransformator (16) und einen daran angeschlossenen ohmschen Widerstand (18) zum Überwachen des durch das Schaltelement (2) fließenden Stroms und einen zweiten Pegeldetektor (20) zum Feststellen, wann der durch das Schaltelement fließende Strom den Wert Null erreicht, aufweist.

3. Leistungswandler nach Anspruch 2, dadurch gekennzeichnet, daß eine Flipflopschaltung (23) zum Ein- und Ausschalten des Schaltelements (2) vorgesehen ist und daß das Flipflop (23) durch das Ausgangssignal des ersten Pegeldetektors (19) ein- und durch das Ausgangssignal des zweiten Pegeldetektors (20) ausgeschaltet wird.

4. Leistungswandler nach Anspruch 3, dadurch gekennzeichnet, daß zwischen dem Ausgang des Flipflop (23) und dem Eingang des Schaltelements (2) ein Leistungsverstärker (25) vorgesehen ist.

5. Leistungswandler nach einem der vorhergehenden Ansprüche, dadurch gekennzeichnet, daß die Gleichrichterschaltung zwei Dioden (4, 5) aufweist, daß das eine Ende der ersten Diode (4) mit dem einen Ende der Sekundärwicklung (3b) und die zweite Diode (5) mit dem anderen Ende der ersten Diode (4) und dem anderen Ende der Sekundärwicklung (3b) verbunden ist.

6. Leistungswandler nach einem der vorhergehenden Ansprüche, dadurch gekennzeichnet, daß die Ausgangsfilterschaltung eine Drosselspule (6) und einen Kondensator (7) aufweist.

7. Leistungswandler nach einem der vorhergehenden Ansprüche, gekennzeichnet durch einen Fehlerspannungsverstärker (9) zum Einstellen des Schaltzeitpunkts des Schaltelements (2) in Abhängigkeit von der Leistungsaufnahme der Last.

**Revendications**

1. Convertisseur de puissance comprenant une source de puissance (1) de courant continu, un élément de commutation (2), un transformateur (3) comportant un enroulement secondaire (3b) et un

7

enroulement primaire (3a) qui est raccordé à ladite source de courant continu et audit élément de commutation (2) de telle façon que cette source de courant continu, l'enroulement primaire et l'élément de commutation forment un circuit fermé, un circuit de commande (14) pour enclencher et déclencher l'élément de commutation, un circuit de rectification connecté à l'enroulement secondaire du transformateur, ainsi qu'un circuit de filtration de sortie raccordé audit circuit de rectification, circuit de filtration à la sortie duquel peut être raccordée une charge extérieure; caractérisé par le fait que le circuit de puissance comporte en outre un circuit en parallèle comprenant un condensateur (12) et une bobine (13) incorporés dans le circuit fermé; et par le fait que le circuit de commande (14) entre en action de telle sorte que l'élément de commutation (2) soit amené à l'état enclenché lorsque le courant circulant dans la bobine (13) atteint une valeur prédéterminée qui dépend de la puissance de sortie du convertisseur de puissance, et que ledit élément de commutation soit amené à l'état déclenché après qui le courant qui parcourt cet élément de commutation a atteint la valeur zéro.

2. Convertisseur de puissance selon la revendication 1, caractérisé par le fait que le circuit de commande (14) renferme un premier transformateur de courant (15) et une résistance (17) qui y est raccordée afin de contrôler le courant qui circule dans la bobine (13); un premier détecteur de niveau (19) pour détecter l'instant où le courant traversant la bobine (13) atteint la valeur prédéterminée qui dépend de la puissance de sortie; un second transformateur de courant (16) et une résistance (18) qui y est raccordée afin de contrôler le courant circulant dans l'élément de commutation (2); ainsi qu'un second détecteur de niveau (20) pour détecter l'instant où le courant circulant dans ledit élément de commutation atteint la valeur zéro.

3. Convertisseur de puissance selon la revendication 2, caractérisé par le fait qu'un circuit à bascule (23) est prévu pour enclencher et déclencher l'élément de commutation (2); et par le fait que la bascule (23) est mise à l'état enclenché par la sortie du premier détecteur de niveau (19) et mise à l'état déclenché par la sortie du second détecteur de niveau (20).

4. Convertisseur de puissance selon la revendication 3, caractérisé par le fait qu'un amplificateur de puissance (25) est intervalé entre la sortie de la bascule (23) et l'entrée de l'élément de commutation (2).

5. Convertisseur de puissance selon l'une quelconque des revendications précédentes, caractérisé par le fait que le circuit de rectification comprend deux diodes (4, 5), l'une des extrémités de la première diode (4) étant raccordée à l'une des extrémités de l'enroulement secondaire (3b), et la seconde diode (5) étant connectée à l'autre extrémité de la première diode (4) et à l'autre extrémité dudit enroulement secondaire (3b).

6. Convertisseur de puissance selon l'une quelconque des revendications précédentes, caractérisé par le fait que le circuit de filtration de sortie comprend une bobine de choc (6) et un condensateur (7).

7. Convertisseur de puissance selon l'une quelconque des revendications précédentes, caractérisé par un amplificateur (9) de tension d'erreur pour ajuster l'instant de commutation de l'élément de commutation (2) en fonction de la puissance nécessitée par la charge.

## Fig. 1

## Fig. 4

1

# Fig. 2

# Fig. 3

Fig. 5

# Fig. 6

ERROR AMPLIFIER

# Fig. 7

(a)

(b)

(c) THRESHOLD LEVEL

(d) THRESHOLD LEVEL

(e)

(f)

(g)

(h)

(i)

(j)

(k)

Fig. 8

CONVERSION EFFICIENCY

OUTPUT CURRENT

(a)

(b) PRIOR ART

OUTPUT VOLTAGE = 5 VOLTS

# Fig. 9

CONVERSION EFFICIENCY

90%

(a)

(b) PRIOR ART

80%

OUTPUT POWER = 100 WATTS

70%

0

5V 10V 24V 50V 100V

OUTPUT VOLTAGE